# EUROPÄISCHE PATENTSCHRIFT

(11) **EP 3 079 967 B1**
(45) Veröffentlichungstag und Bekanntmachung des Hinweises auf die Patenterteilung: **09.10.2019**
(21) Anmeldenummer: 14814819.0
(22) Anmeldetag: 12.12.2014
(51) Int. Cl.: B62D 5/00, F16H 49/00

(54) **FAHRZEUGLENKUNG MIT EINEM ÜBERLAGERUNGSSTELLER**
VEHICLE STEERING SYSTEM WITH A SUPERIMPOSING ACTUATOR
DIRECTION DE VÉHICULE POURVUE D'UN ACTIONNEUR DE SUPERPOSITION

(30) Priorität: 13.12.2013 DE 102013225956
(43) Veröffentlichungstag der Anmeldung: 19.10.2016
(73) Patentinhaber: Ovalo GmbH, 65555 Limburg (DE)
(72) Erfinder: GILGES, Siegmar, 65307 Bad Schwalbach (DE)
(74) Vertreter: Grabovac, Dalibor
(86) Internationale Anmeldenummer: PCT/EP2014/077641
(87) Internationale Veröffentlichungsnummer: WO 2015/086841

(56) Entgegenhaltungen:
- EP-A1- 0 640 778
- EP-A1- 1 783 402
- EP-A2- 1 972 832
- EP-A2- 2 003 368
- DE-A1-102007 000 945
- DE-A1-102007 051 418
- DE-A1-102011 053 323
- DE-A1-102011 109 170
- A J Bamnote ET AL: "Meshing Analysis Of Teeth Of Harmonic Drives: A Computer Based Approach", , 18. Dezember 2003 (2003-12-18), XP055166881, New Delhi Gefunden im Internet: URL:http://www.nacomm03.ammindia.org/Artic les/Ana011.pdf [gefunden am 2015-02-03]
- Ullrich Höltkemeier: "Das Prinzip macht's", , 1 March 2013 (2013-03-01), pages 80-82, XP055487494, Retrieved from the Internet: URL:http://harmonicdrive.de/fileadmin/reda kteure/Presse/Publikationen/Redaktionelle% 20Beiträge/2013/03_2013_Konstruktionspraxi s_Das_Prinzip_macht_s.pdf [retrieved on 2018-06-25]

## Beschreibung

Die Erfindung, wie beansprucht in den Ansprüchen 1, 14 und 15, betrifft eine Fahrzeuglenkung mit einem Überlagerungssteller, der den mit einer Lenkhandhabe ausgeübten Lenkbewegungen zusätzliche Lenkbewegungen überlagert und der einen Motor und ein als Spannungswellengetriebe ausgebildetes Überlagerungsgetriebe aufweist, wobei das Spannungswellengetriebe einen starren Außenring mit einer Innenverzahnung aufweist, in den an zwei gegenüberliegenden Stellen ein flexibler Innenring mit einer Außenverzahnung eingreift.

Eine Überlagerungslenkung hat den Vorteil, dass den Lenkbewegungen, die der Fahrer durch Drehen des Lenkrades vorgibt, fahrsituationsabhängig eine zusätzliche Lenkbewegung überlagert werden kann. Beispielsweise kann eine Überlagerungslenkung derart konzipiert sein, dass bei langsamer Fahrt, wie beim Rangieren oder Einparken, ein großer Radwinkel mit kleineren Lenkradumdrehungswinkeln erzielbar ist, während die Überlagerungslenkung bei schneller Fahrt, beispielsweise auf der Autobahn, umgekehrt wirkt.

Aus der gattungsgemäßen DE 10 2007 051 418 A1 ist ein Getriebe für ein Fahrzeuglenksystem bekannt. Das Getriebe dient dazu, den von einem Fahrer ausgeübten Lenkbewegungen zusätzliche Lenkbewegungen zu überlagern. Das Getriebe weist eine Eingangswelle auf, die mit einem Flexspline drehfest verbunden ist. Darüber hinaus weist das Getriebe eine Ausgangswelle auf, die drehfest mit einem Circularspline verbunden ist. Der Flexspline ist mit einer Außenverzahnung versehen, die mit einer Innenverzahnung des Circularsplines in Eingriff steht. Innerhalb des Flexspline ist ein elektromotorisch angetriebener Wellengenerator angeordnet.

Auch aus DE 10 2007 000 945 A1 ist ein Überlagerungssteller für ein Lenksystem eines Fahrzeuges bekannt. Der Überlagerungssteller weist ein Überlagerungsgetriebe mit einer ersten Getriebeeingangswelle und einer zweiten Getriebeeingangswelle zur Überlagerung der an beiden Getriebeeingangswellen auftretenden Drehwinkeln auf eine Getriebeausgangswelle des Überlagerungsgetriebes auf, wobei die erste Getriebeeingangswelle mit einer Lenkhandhabe wirkverbunden ist. Die zweite Getriebeeingangswelle ist mit einem elektronisch kommutierten Servomotor wirkverbunden.

Aus DE 10 2011 109 170 A1 ist eine Lenkung, die eine Lenkhandhabe und einen Überlagerungssteller aufweist, bekannt. Der Überlagerungssteller wird in Abhängigkeit von einem Ist-Lenkhandhabenwinkel geregelt. Die Lenkung ist dadurch gekennzeichnet, dass eine Regelvorrichtung vorgesehen ist, die ein Verriegeln des Überlagerungsstellers auslöst, wenn ein Regelabweichungswert einen oberen Toleranzwert überschreitet und/oder wenn ein Regelabweichungswert einen unteren Toleranzwert unterschreitet. Unterschiedlichen Fahr- oder Lenksituationen sind hierbei unterschiedliche Toleranzwerte zugeordnet.

Aus DE 10 2011 053 323 A1 ist ein Wellgetriebe für ein Lenksystem eines Fahrzeugs, mit einem radialflexiblen Wälzlager mit einem Innenring, der auf eine Außenumfangsfläche eines exzentrischen Antriebskernes des Wellgetriebes gepasst ist und mit einem Außenring, der auf eine Innenumfangsfläche einer radialflexiblen Abrollbuchse wirkt, und mit radial zwischen dem Innenring und dem Außenring gehaltenen Wälzkörpern bekannt. Eine Dichteinrichtung dichtet das radialflexible Wälzlager nach außen ab. Die Dichteinrichtung weist zumindest eine Dichtscheibe auf, die drehfest mit dem exzentrischen Antriebskern verbunden ist.

Die aus dem Stand der Technik bekannten Fahrzeuglenkungen haben den Nachteil, dass von dem Überlagerungssteller ausgehende Geräusche und Vibrationen, insbesondere über die Lenksäule, in den Innenraum übertragen werden. Den Fahrzeuginsassen fallen diese Geräusche störend auf. Es kann störender Weise zusätzlich vorkommen, dass der Fahrer die von dem Überlagerungssteller verursachten Vibrationen beim Anfassen des Lenkrades fühlt.

Es ist die Aufgabe der vorliegenden Erfindung eine Fahrzeuglenkung anzugeben, die eine Reduktion der im Fahrzeuginnenraum wahrnehmbaren Geräusche und Vibrationen ermöglicht.

Die Aufgabe wird durch eine Fahrzeuglenkung gelöst, die dadurch gekennzeichnet ist, dass die Außenverzahnung (z_{außen}) des flexiblen Innenrings zwischen 54 und 66 Zähnen, insbesondere genau 60 Zähne, aufweist und dass die Innenverzahnung (zᵢₙₙₑₙ) des starren Außenrings genau zwei Zähne mehr aufweist, als die Außenverzahnung des flexiblen Innenrings.

Gemäß einer ersten Alternative wird die Aufgabe auch durch eine Fahrzeuglenkung gelöst, die dadurch gekennzeichnet ist, dass der flexible Innenring statt zwischen 54 und 66 Zähnen, eine Zähnezahl im Bereich von 108 bis 122 Zähnen, insbesondere von genau 120 Zähnen aufweist und dass der starre Außenring genau vier Zähne mehr auf seiner Innenverzahnung aufweist, als der flexible Innenring.

Gemäß einer zweiten Alternative wird die Aufgabe ebenfalls durch eine Fahrzeuglenkung gelöst, die dadurch gekennzeichnet ist, dass die Fahrzeuglenkung auch derart ausgebildet ist, dass der Innenring statt an zwei Stellen an drei Stellen in den Außenring eingreift und dass der flexible Innenring statt zwischen 54 und 66 Zähnen, eine Zähnezahl im Bereich von 81 bis 99 Zähnen, insbesondere von genau 90 Zähnen aufweist und dass der starre Außenring genau drei Zähne mehr aufweist, als der flexible Innenring.

Außerdem wird die Aufgabe gemäß einer dritten Alternative durch eine Fahrzeuglenkung gelöst die dadurch gekennzeichnet ist, dass der Innenring statt an zwei Stellen an vier Stellen in den Außenring eingreift und dass der starre Außenring statt zwei genau vier Zähne mehr aufweist, als der flexible Innenring.

In erfindungsgemäßer Weise wurde erkannt, dass die aus dem Stand der Technik bekannten Überlagerungssteller Überlagerungsgetriebe aufweisen, deren Innenring eine Zähnezahl z_{außen} von 100 oder mehr aufweist, während der Außenring eine Zähnezahl von zᵢₙₙₑₙ = z_{außen} + 2 aufweist, und dass die große Zahl an Zähnen sich negativ auf die Geräusch- und Vibrationsentwicklung auswirkt.

Insbesondere wurde erkannt, dass durch die Verwendung eines Überlagerungsgetriebes, dessen Innenring beispielsweise lediglich 60 Zähne aufweist, während der Außenring 62 Zähne aufweist, ohne wesentliche Funktionseinschränkung der Fahrzeuglenkung bei wesentlich niedrigeren Drehzahlen des Motors betrieben werden kann, was zum einen mit einer geringeren Geräuschentwicklung einhergeht, weil pro Zeiteinheit weniger Geräusche verursachende Zahneingriffsereignisse stattfinden. Darüber hinaus weisen die entstehenden Geräusche eine niedrigere Frequenz auf, die einerseits durch die Fahrzeuginsassen weniger wahrnehmbar ist und die in einem Frequenzbereich liegt, in dem ein Fahrzeug durch andere Quellen ohnehin Geräusche verursacht, die dem Fahrer vertraut und bekannt vorkommen und somit nicht als störend wahrgenommen werden, so dass die durch die Überlagerungslenkung verursachten Geräusche nicht hervorstechen. Im Gegenteil empfindet der Fahrer Geräusche in diesen Frequenzbereichen als akustisch angenehm.

Die erfindungsgemäße Fahrzeuglenkung ist auch insbesondere deshalb geräuschärmer und entwickelt deshalb weniger Vibrationen, weil aufgrund der besonderen Ausbildung des Spannungswellengetriebes für die speziellen Anforderungen einer Fahrzeuglenkung ein geringerer Verschleiß auftritt, was nachfolgend im Detail erläutert ist. Beispielsweise führt ein Verschleiß an den Lagerflächen des Spannungswellengetriebes zu sogenannten Pittings, also Ausbrechungen, die im Betrieb durch Geräusche und Vibrationen wahrnehmbar sind. Die erfindungsgemäße Fahrzeuglenkung den Vorteil, dass der Abrieb auf den Zahnflanken auf Grund der geringeren Zahl von Zahneingriffen geringer ist.

Bei einer besonderen Ausführung der Fahrzeuglenkung weisen die Außenverzahnung und die Innenverzahnung aufeinander abgestimmt dasselbe Modul, nämlich jeweils ein Modul im Bereich von 0,7 mm bis 1,0 mm oder im Bereich von 0,8 mm bis 0,9 mm oder im Bereich von 0,84 mm bis 0,86 mm oder von 0,8466 mm auf. Ein solches Spannungswellengetriebe und insbesondere auch ein aus diesem Spannungswellengetriebe und dem Motor bestehender Überlagerungssteller können besonders kompakt und raumsparend ausgebildet sein.

Insbesondere kann vorgesehen sein, dass die Außenverzahnung des Innenrings einen Teilkreisdurchmesser im Bereich von 50 mm bis 51 mm oder im Bereich von 50,6 mm bis 50,9 mm oder von 50,796 mm, aufweist, und/oder dass die Innenverzahnung des Außenrings einen Teilkreisdurchmesser im Bereich von 52 mm bis 53 mm oder im Bereich von 52,4 mm bis 52,6 mm oder von 52,489 mm, aufweist. Der Teilkreisdurchmesser ist definiert als das Produkt von Zähnezahl und Modul.

Bei einer ganz besonders zuverlässigen, robusten und dennoch geräuscharm arbeitenden Ausführung weist das Spannungswellengetriebe eine Deflektion im Bereich von 1 mm bis 1,2 mm oder im Bereich von 1,1 mm bis 1,16 mm oder von 1,1355 mm auf. Unter der Deflektion wird der radiale Weg verstanden, den ein Zahn der Außenverzahnung des Innenrings beim Wechsel zwischen Niedrig- und Hochachse zurücklegt.

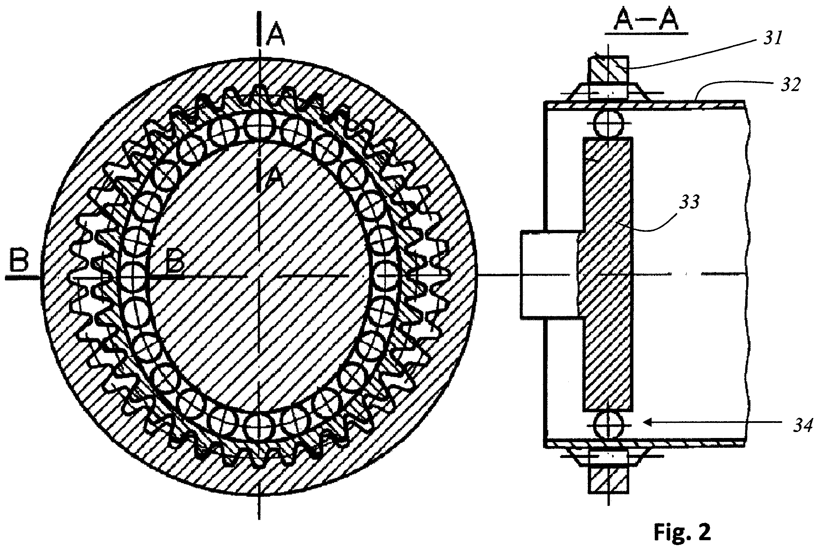

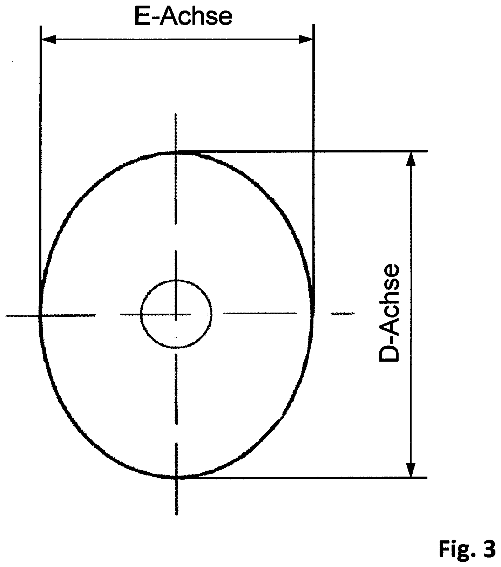

Figur 2 illustriert schematisch den Aufbau eines Spannungswellengetriebes, das unter anderem ein Außenring 31, einen Innenring 32, einen Wellengenerator 33 und ein Kugellager 34 aufweist. Figur 3 illustriert schematisch, die Hochachse D des Innenrings und die Niedrigachse E des Innenrings. Die Deflektion berechnet sich als (D - E) / 2.

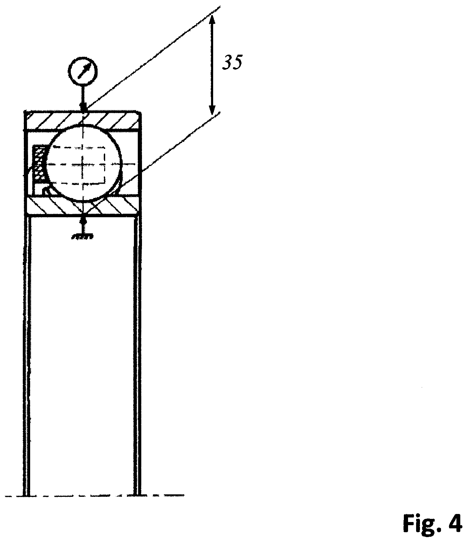

Bei einer besonderen Ausführung ist vorgesehen, dass das Spannungswellengetriebe einen Wellengenerator aufweist, der mittels eines Lagers drehbar in dem Innenring gelagert ist. In vorteilhafter Weise kann das Lager eine Schnitthöhe im Bereich von 6 mm bis 7,5 mm oder im Bereich von 6,6 mm bis 6,9 mm oder von 6,74 mm aufweisen. Ein Lager mit einer solchen Schnitthöhe ist für die spezielle Anwendung in dem Spannungswellengetriebe der Fahrzeuglenkung besonders langlebig und dennoch geräuscharm arbeitend ausbildbar. Dies kann, wie nachfolgend detaillierter geschildert ist, insbesondere dadurch erreicht werden, dass die Dimensionierung des Lagers speziell auf die oben genannte Deflektion abgestimmt ist. Unter der Schnitthöhe 35 wird der spielfreie radiale Abstand der den Wälzkörpern abgewandten Flächen der Lagerringe verstanden, was in Figur 4 illustriert ist.

Bei einer besonderen Ausführung weisen die Wälzkörper des Lagers, die insbesondere als Kugeln ausgebildet sein können, einen Wälzkörperdurchmesser im Bereich von 4,6 mm bis 4,9 mm oder im Bereich von 4,7 mm bis 4,8 mm oder von 4,763 mm auf.

Insbesondere kann vorteilhaft vorgesehen sein, dass bei dem Spannungswellengetriebe die Größe, die sich errechnet aus (Deflektion/Schnitthöhe) im Bereich von 0,15 bis 0,19 liegt oder im Bereich von 0,16 bis 0,18 liegt oder dass für das Spannungswellengetriebe gilt: (Deflektion/Schnitthöhe) = 0,168.

Bei einer ganz besonders verschleißarmen Ausführung ist vorgesehen, dass bei dem Spannungswellengetriebe die Größe, die sich errechnet aus (Deflektion/Schnitthöhe) x Wälzkörperdurchmesser im Bereich von 0,7 bis 0,9 liegt oder im Bereich von 0,75 bis 0,85 liegt oder dass für das Spannungswellengetriebe gilt: (Deflektion/Schnitthöhe) x Wälzkörperdurchmesser = 0,802. Bei einer solchen Ausführung ist nämlich sicher gestellt, dass der äußere Lagerring, der sich im Betrieb fortlaufend und periodisch entsprechend der Deflektion verformt, nicht vorschnell ermüdet. Darüber hinaus ist sichergestellt, dass die Hertzschen Pressung der Wälzkörper gegen die Oberfläche der Laufbahnen der Lagerringe ausreichend klein ist, um Beschädigungen, wie Graufleckigkeit oder Pittings, dauerhaft zu vermeiden.

Die Fahrzeuglenkung kann in vorteilhafter Weise derart ausgebildet sein, dass bei dem Spannungswellengetriebe das Verhältnis aus der Deflektion und dem Teilkreisdurchmesser des Innenrings im Bereich von 0,02 bis 0,025 liegt oder im Bereich von 0,022 bis 0,023 liegt oder dass bei dem Spannungswellengetriebe das Verhältnis aus der Deflektion und dem Teilkreisdurchmesser des Innenrings 0,024 beträgt.

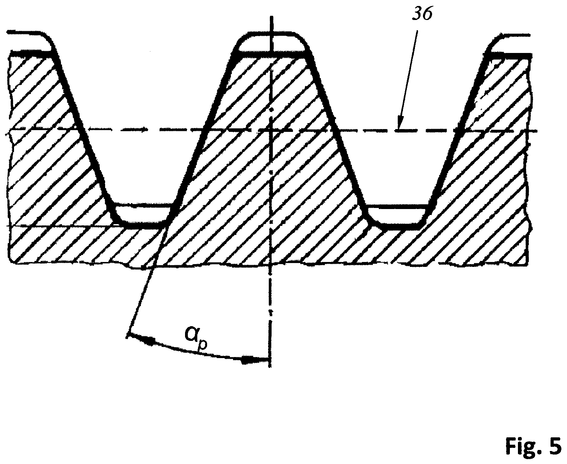

In ebenfalls vorteilhafter Weise kann vorgesehen sein, dass die Zähne der Verzahnung des Innenrings einen Profilwinkel im Bereich von 30 Grad bis 38 Grad oder im Bereich von 34 Grad bis 36 Grad oder von 34,81 Grad aufweisen, und/oder dass die Zähne der Verzahnung des Außenrings einen Profilwinkel im Bereich von 30 Grad bis 38 Grad oder im Bereich von 33 Grad bis 35 Grad oder von 33,979 Grad aufweisen. Der Profilwinkel ap ist, wie Figur 5 illustriert, der Winkel der Flanke bezogen auf die Zahnmitte am Bezugsprofil. Die gestrichelt eingezeichnete Linie ist die Profilbezugslinie 36. Das Bezugsprofil ist ein allgemeingültiges Profil, unabhängig vom Modul der vorliegenden Verzahnung, welches zur Definition einer Verzahnung verwendet wird. Das Bezugsprofil entspricht einem Zahnrad mit unendlicher Zähnezahl. Durch den Zusammenhang Teilkreisdurchmesser = Modul x Zähnezahl erklärt sich bei unendlicher Zähnezahl der Umstand das der Teilkreisdurchmesser ebenfalls unendlich wird und eine Gerade (Zahnstange) entsteht.

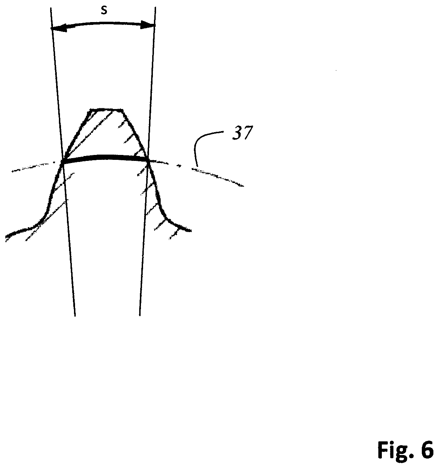

Es hat sich gezeigt, dass es für die Erfindung von besonderem Vorteil ist, wenn bei dem Spannungswellengetriebe die Zähne der Verzahnung des Innenrings eine Zahndicke am Teilkreis im Bereich von 0,9 mm bis 1,1 mm oder im Bereich von 1 mm bis 1,1 mm oder von 1,04 mm aufweisen, und/oder wenn die Zähne der Verzahnung des Außenrings eine Zahndicke im Bereich von 1,8 mm bis 2 mm oder im Bereich von 1,9 mm bis 1,96 mm oder von 1,9309 mm aufweisen. Die Zahndicke s ist, wie Figur 6 illustriert, die Länge eines Bogenstückes eines Zahnes gemessen am Teilkreis 37 über die Profilbreite.

Bei einer besonderen Ausführungsform liegt bei dem Spannungswellengetriebe das Verhältnis aus der Deflektion und der Zähnezahl des Innenrings im Bereich von 0,017 bis 0,021 oder im Bereich von 0,018 bis 0,02 liegt. Insbesondere kann vorteilhaft vorgesehen sein, dass bei dem Spannungswellengetriebe das Verhältnis aus der Deflektion der Zähnezahl des Innenrings 0,0189 beträgt.

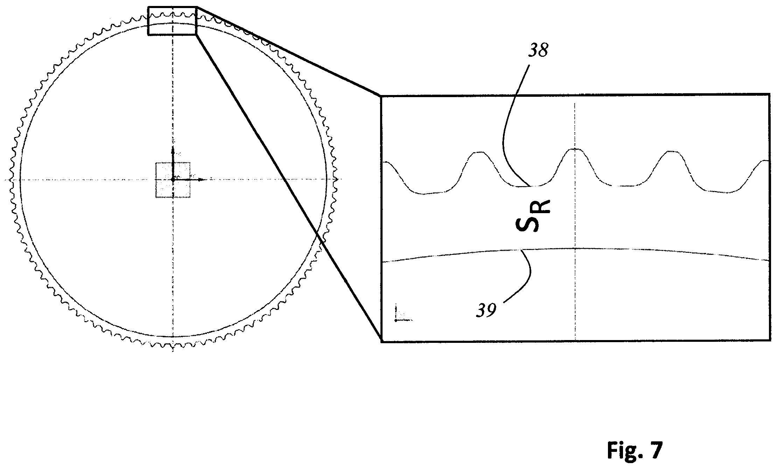

Bei einer vorteilhaften Ausführung ist vorgesehen, dass bei dem Spannungswellengetriebe das Verhältnis aus der Deflektion und der Kranzdicke des Innenrings im Bereich von 1,2 bis 1,6 liegt oder im Bereich von 1,3 bis 1,5 liegt oder dass bei dem Spannungswellengetriebe das Verhältnis aus der Deflektion der Kranzdicke des Innenrings 1,38 beträgt. Die Kranzdicke S_{R} ist, wie Figur 7 illustriert, die Wandstärke zwischen der Innenfläche 39 des flexiblen Innenrings und dem Zahnfuß 38 des flexiblen Innenrings und errechnet sich als die Hälfte der Differenz von Innendurchmesser des Innenrings und Fußkreisdurchmesser des Innenrings.

In vorteilhafter Weise kann auch vorgesehen sein, dass bei dem Spannungswellengetriebe das Verhältnis aus der Deflektion und dem Profilwinkel der Zähne des Innenrings im Bereich von 0,03 bis 0,042 liegt oder im Bereich von 0,032 bis 0,035 liegt oder dass bei dem Spannungswellengetriebe das Verhältnis aus der Deflektion und dem Profilwinkel der Zähne des Innenrings 0,0326 beträgt.

In ebenfalls vorteilhafter Weise kann darüber hinaus auch vorgesehen sein, dass bei dem Spannungswellengetriebe das Verhältnis aus der Deflektion und der Zahndicke der Zähne des Innenrings im Bereich von 0,9 bis 1,3 liegt oder im Bereich von 1 bis 1,2 liegt oder dass bei dem Spannungswellengetriebe das Verhältnis aus der Deflektion und der Zahndicke der Zähne des Innenrings 1,09 beträgt.

Bei einer ganz besonders vorteilhaften Ausführung des Spannungswellengetriebes liegt der evolventische Anteil der Verzahnungslänge des Innenrings im Bereich von 20% bis 40% oder im Bereich von 25% bis 35%. Insbesondere kann vorteilhaft vorgesehen sein, dass der evolventische Anteil der Verzahnungslänge des Innenrings 30% beträgt. Alternativ oder zusätzlich kann auch vorgesehen sein, dass der evolventische Anteil der Verzahnungslänge des Außenrings im Bereich von 15% bis 35% liegt oder im Bereich von 20% bis 30% liegt oder 26% beträgt. Eine Ausbildung der Verzahnungen von Innenring und Außenring mit den genannten evolventischen Anteilen hat den besonderen Vorteil eines geringen Wälzanteils und eines höheren Gleitanteils, was sich besonders vorteilhaft auf die Geräuschentwicklung der Fahrzeuglenkung auswirkt. Der evolventische Anteil der Verzahnungslänge ist der Anteil, der das sich dadurch auszeichnet, dass der Abschnitt der Verzahnung einer vom Grundkreis ausgehenden Evolvente gleicht.

Die Zähne des Innenrings können eine vordere und/oder hintere Rücknahme aufweisen. Hierdurch wird eine Verbesserung des Zahneingriffs erreicht. Es kann, alternativ oder zusätzlich, auch vorgesehen sein, dass der Verlauf der Zahnkopfhöhe über die Zahnbreite einen balligen Verlauf aufweist.

Bei einer besonderen Ausführung ist vorgesehen, dass der Zahnkopf und der Zahnfuß parallel verlaufen.

Es kann, insbesondere um Zahnkopfkollisionen zu vermeiden und akustische Anregung zu reduzieren, vorteilhaft auch vorgesehen sein, dass der Verlauf der Zahnkopfhöhe des Innenrings entlang der Zahnbreite wenigstens eines Zahnes, vorzugsweise jedes Zahnes, wenigstens in einem Zahneingriffsbereich keinen zur Mittelachse parallelen Linearanteil aufweist. Diesbezüglich wurde erkannt, dass die bislang übliche Zahngeometrie am flexiblen Innenring, die einen symmetrischen Querschnittsverlauf mit einer vorderen und einer hinteren Zahnrücknahme und zumeist einen zylindrischen Zahnanteil aufweist, einen Flankenkontaktbereich im vorderen (dem Flextopfboden abgewandten) Bereich der Verzahnung bedingt. Bei einer Veränderung des zu übertragenden Drehmomentes verschiebt sich dieser Flankenkontaktbereich bedingt durch die Radialanteile der Zahnkräfte auf den zylindrischen Teil (Verlauf der Zahnkopfhöhe entlang der Zahnbreite parallel zur Mittelachse) der Verzahnung. Durch diesen Umstand wird der Flankenkontaktbereich weiter in die Mitte der Verzahnung verlagert. Dies geht mit einem stark progressiven Steifigkeitsanstieg einher, der direkte Auswirkungen auf die Flankenpressung der Innenringverzahnung mit der Verzahnung des Außenrings hat. Es wurde erkannt, dass insbesondere durch diese Flankenpressung und dem punktuellen Flankenkontaktbereich zur Anregung einer Schwingung kommen kann, die sich negativ auf das akustische Verhalten des Gesamtsystems auswirkt.

Bei einer vorteilhaften Ausführung entfällt der zylindrische Anteil der Verzahnung des flexiblen Innenrings gänzlich. Insbesondere kann dies vorteilhaft beispielsweise dadurch erreicht werden, dass ein Verlauf der Zahnkopfhöhe entlang der Zahnbreite - wenigstens in dem Zahneingriffsbereich - gewählt wird, der durch ein Polynom n-ter Ordnung beschreibbar ist, wobei n größer als 1 ist.

Bei einer besonderen Ausführung ist vorgesehen, dass der Verlauf der Zahnkopfhöhe des Innenrings entlang der Zahnbreite wenigstens eines Zahnes, vorzugsweise jedes Zahnes, wenigstens in einem Zahneingriffsbereich frei von einem Linearanteil ist und/oder dass der Verlauf der Zahnkopfhöhe entlang der Zahnbreite wenigstens eines Zahnes, vorzugsweise jedes Zahnes, wenigstens in einem Zahneingriffsbereich wenigstens einen nichtlinearen Abschnitt aufweist und/oder dass der Verlauf der Zahnkopfhöhe entlang der Zahnbreite wenigstens eines Zahnes, vorzugsweise jedes Zahnes, wenigstens in einem Zahneingriffsbereich asymmetrisch ist.

Durch Reduktion oder gänzliches Vermeiden der Linearanteile des Verlaufs der Zahnkopfhöhe entlang der Zahnbreite, insbesondere durch den Entfall des zylindrischen Anteils weist, der Steifigkeitsverlauf nicht mehr den oben beschriebenen, stark progressiven Verlauf auf. Insbesondere wird der Flankenkontaktbereich entlang der Eingriffsachse vergrößert. Des Weiteren wird erfindungsgemäß hierdurch der radiale Gleitanteil der Flanken des flexiblen Innenrings in Bezug auf die Verzahnung des starren Außenrings reduziert, was die Anregung von Schwingungen durch mögliche Auffälligkeiten der Flankentopologie reduziert.

Bei einer besonderen Ausführung ist der Verlauf der Zahnkopfhöhe des Innenrings entlang der Zahnbreite im mathematischen Sinne stetig. Insbesondere kann, wie bereits erwähnt vorteilhaft vorgesehen sein, dass der Verlauf der Zahnkopfhöhe entlang der Zahnbreite durch ein Polynom n-ter Ordnung beschreibbar ist, wobei n größer als 1 ist und/oder dass der Verlauf der Zahnkopfhöhe entlang der Zahnbreite abschnittsweise durch je ein Polynom n-ter Ordnung beschreibbar ist, wobei n größer als 1 ist.

Bei einer besonderen Ausführung ist vorgesehen, dass der Verlauf der Zahnkopfhöhe entlang der Zahnbreite stetig bis auf die Zahnkopfhöhe Null abfällt und/oder dass das Getriebebauteil als topfförmiger Innenring ausgebildet ist und dass die Zahnkopfhöhe in Richtung des Topfbodens stetig bis auf die Zahnkopfhöhe Null abfällt.

Durch die beschriebenen, erfindungsgemäß möglichen Verläufe der Zahnkopfhöhe, insbesondere des Teils zum Topfboden gerichteten Abfalls der Zahnkopfhöhe, der vorzugsweise durch ein Polynom höherer Ordnung als 1 beschrieben werden kann, wird zusätzlich erreicht, dass besonders hohe Drehmomente übertragen werden können, ohne dass es zu einem Überratschen kommt. Kurz: Eine solche Ausführung weist ein hohes Überratschmoment auf. Je nach Untersetzung und Baugröße kann dies insbesondere dadurch unterstützt sein, dass die Zahnkopfhöhe in Richtung des Topfbodens stetig bis auf die Zahnkopfhöhe Null abfällt.

Bei einer besonderen Ausführung ist vorgesehen, dass jeder Zahnfuß entlang der Zahnfußbreite linear verläuft oder dass der Verlauf der Zahnfüße parallel zum Verlauf der Zahnköpfe ist. Je nach Anwendung kann jedoch auch vorgesehen sein, dass der Zahnfußverlauf anders ausgebildet ist.

Bei einer besonderen Ausführung ist vorgesehen, dass der Verlauf der Zahnkopfhöhe jedes Zahnes der Innenverzahnung des Außenrings entlang der Zahnkopfbreite asymmetrisch ist.

Es kann vorteilhaft insbesondere vorgesehen sein, dass der Verlauf der Zahnkopfhöhe wenigstens eines Zahnes, vorzugsweise jedes Zahnes, der Innenverzahnung des Außenrings entlang der Zahnkopfbreite wenigstens in einem Zahneingriffsbereich durch ein Polynom n-ter Ordnung beschreibbar ist, wobei n größer als 1 ist und/oder dass der Verlauf der Zahnkopfhöhe wenigstens eines Zahnes, vorzugsweise jedes Zahnes, der Innenverzahnung entlang der Zahnkopfbreite wenigstens in einem Zahneingriffsbereich abschnittsweise durch je ein Polynom n-ter Ordnung beschreibbar ist, wobei n größer als 1 ist.

Bei einer besonderen Ausführung ist vorgesehen, dass der Verlauf der Zahnkopfhöhe wenigstens eines Zahnes der Innenverzahnung des Außenrings, vorzugsweise jedes Zahnes der Innenverzahnung, einen ansteigenden Abschnitt und einen abfallenden Abschnitt aufweist, wobei die Beträge der Steigungswinkel des ansteigenden und des abfallenden Abschnitts unterschiedlich sind.

Besonders vorteilhaft ist eine Ausführung bei der vorgesehen ist, dass der Innenring als Flextopf ausgebildet ist und dass der Verlauf der Zahnkopfhöhe wenigstens eines Zahnes der Innenverzahnung, vorzugsweise jedes Zahnes der Innenverzahnung, einen dem Topfboden zugewandten Abschnitt und einen vom Topfboden abgewandten Abschnitt aufweist, wobei der Betrag des Steigungswinkels des dem Topfboden zugewandten Abschnitts relativ zu einer zur Mittelachse parallelen Achse größer ist, als der der Betrag des Steigungswinkels des vom Topfboden abgewandten Abschnitts relativ zu der zur Mittelachse parallelen Achse. Eine solche Ausführung bietet einerseits Vorteile hinsichtlich der Vermeidung einer Kopfkollision und hinsichtlich einer Geräuschreduzierung, jedoch auch in Bezug auf das maximal übertragbare Drehmoment, also ein besonders großes Überratschmoment.

Alternativ oder zusätzlich kann vorgesehen sein, dass der Verlauf der Zahnkopfhöhe wenigstens eines Zahnes der Innenverzahnung, vorzugsweise jedes Zahnes der Innenverzahnung, einen ansteigenden Abschnitt und einen abfallenden Abschnitt und zwischen diesen Abschnitten einen zur Mittelachse parallelen Abschnitt aufweist.

Alternativ zu einer Ausführung, bei der der Verlauf der Zahnkopfhöhe wenigstens eines Zahnes der Innenverzahnung, vorzugsweise jedes Zahnes der Innenverzahnung, entlang der Zahnkopfbreite der Innenverzahnung ansteigt und wieder abfällt kann vorgesehen sein, dass die Zähne der Innenverzahnung ausschließlich eine einseitige Zahnrücknahme aufweisen. Eine solche Ausführung weist (ohne Verzicht auf die Vorteile der Vermeidung einer Kopfkollision und hinsichtlich einer Geräuschreduzierung) ein ganz besonders hohes Überraschmoment auf.

Vorzugsweise ist der Motor der Fahrzeuglenkung ganz speziell auf die oben genannten Ausprägungen des Spannungswellengetriebes abgestimmt. Hierbei kann vorteilhaft vorgesehen sein, dass mehr als zwei Spulen des Motors auf eine gemeinsame Motorphase geschaltet sind und/oder dass wenigstens ein Zahn des Motors mit wenigstens zwei zueinander parallel geschalteten Drähten bewickelt ist. Eine solche Ausführung hat den besonderen Vorteil, dass auf einfache Weise sichergestellt werden kann, dass der Motor ein zum Betreiben der Fahrzeuglenkung ausreichendes Drehmoment aufbringen kann.

In vorteilhafter Weise kann auch vorgesehen sein, dass auf wenigstens einem Statorzahn, insbesondere auf allen Statorzähnen, jeweils genau 17 Windungen vorhanden sind. Ganz besonders vorteilhaft ist eine Ausführung, bei der auf wenigstens einem Statorzahn mehr als 17, insbesondere genau 18 oder 19, Windungen vorhanden sind, und/oder dass bei dem Motor die Spulenquerschnittsfläche pro Spulenzahn größer als 1,4 mm² ist; dies unabhängig davon, auf wie viele Drähte sich die Spulenquerschnittsfläche verteilt. Eine solche Ausführung kann hierdurch vorteilhafter Weise derart ausgebildet sein, dass ein ausreichendes Drehmoment zur Verfügung gestellt ist.

Von besonderem Vorteil ist es außerdem, wenn der Rotor des Motors mehr als 4 Polpaare aufweist. Außerdem kann vorgesehen sein, dass die Länge der Magnete ca. 20 mm, insbesondere 19,7 mm, beträgt. Ganz besonders vorteilhaft ist eine Ausführung, bei der die Länge der Magnete mehr als 20 mm beträgt. Eine solche Ausführung kann hierdurch vorteilhafter Weise derart ausgebildet sein, dass ein ausreichendes Drehmoment zur Verfügung gestellt ist.

In vorteilhafter Weise kann außerdem und unabhängig von den vorgenannten Maßnahmen vorgesehen sein, dass der Kopfkreisdurchmesser der Magnete ca. 40 mm beträgt. Insbesondere kann vorteilhaft vorgesehen sein, dass der Kopfkreisdurchmesser der Magnete größer als 40 mm ist. Es ist - alternativ oder zusätzlich - in vorteilhafter Weise auch möglich, dass der Außendurchmesser des Rotors im Bereich von 42 mm bis 46 mm liegt oder dass der Außendurchmesser des Rotors 45 mm beträgt.

Bei einer vorteilhaften Ausführungsform, die sowohl besonders kompakt, als auch besonders robust ausgebildet werden kann, sind der Motor und das Spannungswellengetriebe koaxial zueinander angeordnet. Alternativ oder zusätzlich kann auch vorgesehen sein, dass der Motor und das Spannungswellengetriebe gemeinsam einen Überlagerungssteller bilden und/oder dass der Motor und das Spannungswellengetriebe in einem gemeinsamen Gehäuse angeordnet sind. Das Gehäuse kann mit einer Fahrzeugkarosserie drehfest verbunden sein.

Insbesondere kann vorgesehen sein, dass der Motor und das Spannungswellengetriebe gemeinsam einen Überlagerungssteller bilden, der eine mit der Lenkhandhabe mechanisch verbundene Eingangswelle und eine von dem Motor angetriebene, mit einem Wellengenerator des Spannungswellengetriebes mechanisch verbundene, koaxial zur Eingangswelle angeordnete Antriebswelle aufweist.

Um die oben beschriebenen Vorteile der Fahrzeuglenkung wenigstens zum Teil zu erreichen ist es gemäß der ersten Alternative der Erfindung auch möglich, dass der flexible Innenring statt zwischen 54 und 66 Zähnen, eine Zähnezahl im Bereich von 108 bis 122 Zähnen, insbesondere von genau 120 Zähnen aufweist und dass der starre Außenring genau vier Zähne mehr auf seiner Innenverzahnung aufweist, als der flexible Innenring. Hierbei kann insbesondere vorgesehen sein, dass die Außenverzahnung und die Innenverzahnung jeweils einen Modulwert aufweisen, der der Hälfte des in Anspruch 2 genannten Modulwerts entspricht.

Alternativ kann die Fahrzeuglenkung gemäß der zweiten Alternative auch derart ausgebildet sein, dass der Innenring statt an zwei Stellen an drei Stellen in den Außenring eingreift und dass der flexible Innenring statt zwischen 54 und 66 Zähnen, eine Zähnezahl im Bereich von 81 bis 99 Zähnen, insbesondere von genau 90 Zähnen aufweist und dass der starre Außenring genau drei Zähne mehr aufweist, als der flexible Innenring. Hierbei kann insbesondere vorgesehen sein, dass die Außenverzahnung und die Innenverzahnung jeweils einen Modulwert aufweisen, der der 2/3 des in Anspruch 2 genannten Modulwerts entspricht.

Als dritte Alternative kann die Fahrzeuglenkung, wie bereits erläutert, auch in der Weise ausgebildet sein, dass der Innenring statt an zwei Stellen an vier Stellen in den Außenring eingreift und dass der starre Außenring statt zwei genau vier Zähne mehr aufweist, als der flexible Innenring. Eine solche Ausführung ist jedoch deutlich aufwändiger, als eine Ausführung mit zwei Eingriffsstellen, wie sie oben beschrieben ist.

In der Zeichnung ist der Erfindungsgegenstand schematisch dargestellt und wird anhand der Figuren beschrieben, wobei gleiche oder gleich wirkende Elemente zumeist mit denselben Bezugszeichen versehen sind. Dabei zeigen:
- Fig. 1: ein Ausführungsbeispiel einer erfindungsgemäßen Fahrzeuglenkung 1,
- Fig. 2: schematisch den Aufbau eines Ausführungsbeispiels eines erfindungsgemäßen Spannungswellengetriebes,
- Fig. 3: schematisch die Hochachse D des Innenrings und die Niedrigachse E des Innenrings,
- Fig. 4: eine Darstellung zur Erläuterung der Schnitthöhe,
- Fig. 5: eine Darstellung zur Erläuterung des Profilwinkels,
- Fig. 6: eine Darstellung zur Erläuterung der Zahndicke, und
- Fig. 7: eine Darstellung zur Erläuterung der Kranzdicke.

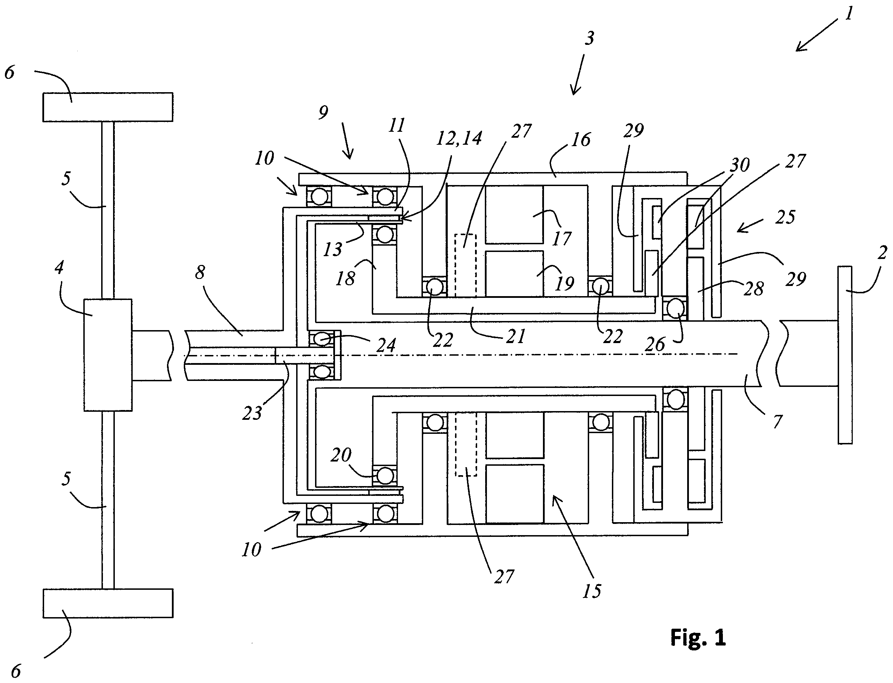

Fig. 1 zeigt ein Ausführungsbeispiel einer erfindungsgemäßen Fahrzeuglenkung 1. Die Fahrzeuglenkung 1 weist eine Lenkhandhabe 2 und einen Überlagerungssteller 3 auf. Der Überlagerungssteller 3 hat die Funktion, den mit einer Lenkhandhabe 2 ausgeübten Lenkbewegungen zusätzliche Lenkbewegungen zu überlagern. Die von dem Fahrer mit der Lenkhandhabe 2 ausgeübten Lenkbewegungen werden zusammen mit den zusätzlichen Lenkbewegungen über einen Lenkgetriebe 4 und über Spurstangen 5 zu den Rädern 6 übertragen und die Radlenkwinkel der Räder 6 entsprechend eingestellt.

Der Überlagerungssteller 3 weist eine Eingangswelle 7 auf, die mit der Lenkhandhabe 2 mechanisch verbunden ist. Der Überlagerungssteller 3 hat außerdem eine Ausgangswelle 8, die mechanisch an das Lenkgetriebe 4 angekoppelt ist.

Der Überlagerungssteller 3 beinhaltet ein Spannungswellengetriebe 9. Das Spannungswellengetriebe 9 weist die Ausgangswelle 8 auf, die mittels eines Abtriebslagers 10 drehbar gelagert ist. Die Ausgangswelle 8 ist fest mit einem starren Außenring 11 verbunden, der eine Innenverzahnung 12 aufweist. Das Spannungswellengetriebe 9 weist außerdem einen in radialer Richtung flexiblen Innenring 13 auf, der eine Außenverzahnung 14 aufweist. Die Außenverzahnung 14 des flexiblen Innenrings 11 weist genau 60 Zähne auf, während die Innenverzahnung 12 des starren Außenrings 11 genau 62 Zähne aufweist. Die Außenverzahnung 14 des flexiblen Innenrings 11 ist mit der Innenverzahnung 12 des Außenrings 11 an zwei einander gegenüberliegenden Stellen in Eingriff.

Der flexible Innenring 13 ist drehfest mit der Eingangswelle 7 verbunden.

Der Überlagerungssteller 3 weist außerdem einen elektrischen Überlagerungsantrieb 15 auf, der einen an einem Gehäuse 16 befestigten Stator 17 und einen drehfest zu einem Wellengenerator 18 angeordneten Rotor 19 aufweist. Das Gehäuse 16 kann mit einer Fahrzeugkarosserie drehfest verbunden sein.

Der Wellengenerator 18 ist mit einem Wellengeneratorlager 20 versehen, das es ermöglicht, den Wellengenerator 18 innerhalb des Innenrings 13 zu drehen, wobei der Innenring 13 von dem Wellengenerator 18 und seinem Wellengeneratorlager 20 in eine ovale Form gedrückt wird, die bei Drehung des Wellengenerators 18 innerhalb des Innenrings 13 umläuft, so dass sich die Außenverzahnung 14 des Innenrings 13 auf der Innenverzahnung 12 des Außenrings 11 abwälzt. Der Wellengenerator 18 ist mit einer als Hohlwelle ausgebildeten Antriebswelle 21 verbunden, die mittels mindestens eines Lagers 22, insbesondere zwei Lager, drehbar an dem Gehäuse 16 gelagert ist.

Die Ausgangswelle 8 ist ebenfalls wenigstens teilweise als Hohlwelle ausgeführt, in der ein Zentrierdorn 23 verankert ist. Der Zentrierdorn 23 dient dazu, die Ausgangswelle 8 und die Eingangswelle 7 mittels eines weiteren Lagers 24 zueinander drehbar zu zentrieren und zu lagern.

Der Überlagerungssteller 3 weist ein Lagermodul 25 auf, das ein Lager 26 zur drehbaren Lagerung der Eingangswelle 7 aufweist. Innerhalb des Lagermoduls 25 ist ein Drehwinkelsensor 27 vorgesehen, dessen Ausgangssignale dazu verwendet werden, die Kommutierung des elektrischen Überlagerungsantriebs 15 zu steuern bzw. zu regeln. Der Drehwinkelsensor 27 kann in einer alternativen Ausführung nicht im Lagermodul 25 vorgesehen sein, sondern benachbart zu dem Rotor 19 in einem Bereich zwischen dem Rotor 19 und dem Wellengenerator 18. Dieser Drehwinkelsensor 27 ist in Figur 1 gestrichelt dargestellt.

Die Kommutierung des Überlagerungsantriebs 15 wird von einer Gesamtelektronik 30 gesteuert, die die Ausgangssignale des Drehwinkelsensors 27 empfängt. Die Gesamtelektronik 30 kann aus mehreren Bestandteilen bestehen, wie schematisch in Figur 1 dargestellt ist. Zudem kann die Gesamtelektronik 30 in einer alternativen Ausführung als Wegbausteuergerät außerhalb des Überlagerungsstellers angeordnet sein.

Der Überlagerungssteller 3 kann mit einem in den Überlagerungssteller integrierten Lenkwinkelsensor 28 ausgerüstet sein. Konkret ist der Lenkwinkelsensor 28 ebenfalls in dem Lagermodul 25 angeordnet und dazu ausgebildet, die Drehwinkelstellung der Eingangswelle 7 kontinuierlich zu messen und entsprechende Signale an die Gesamtelektronik 30 zu senden. Der Lenkwinkelsensor 28 kann in einer alternativen Ausführung im Bereich der Lenkhandhabe 2 angeordnet sein.

Die Gesamtelektronik 30 beinhaltet eine Überlagerungselektronik, die den Überlagerungsantrieb 15 in Abhängigkeit von Signalen des Lenkwinkelsensors 28 und in Abhängigkeit von weiteren Parametern bezüglich des Fahrzustandes, die die Gesamtelektronik 30 von außen empfängt, regelt.

Das Lagermodul 25 weist ein eigenes Gehäuse 29 auf. Dieses bildet einen Deckel für das Gehäuse 16 des Überlagerungsstellers 3 und dichtet das Gehäuse 16 gleichzeitig ab.

### Bezugszeichenliste:

- 1: Fahrzeuglenkung
- 2: Lenkhandhabe
- 3: Überlagerungssteller
- 4: Lenkgetriebe
- 5: Spurstangen
- 6: Räder
- 7: Eingangswelle
- 8: Ausgangswelle
- 9: Spannungswellengetriebe
- 10: Abtriebslager
- 11: Außenring
- 12: Innenverzahnung
- 13: Innenring
- 14: Außenverzahnung
- 15: Überlagerungsantrieb
- 16: Gehäuse
- 17: Stator
- 18: Wellengenerator
- 19: Rotor
- 20: Wellengeneratorlager
- 21: Antriebswelle
- 22: Lager
- 23: Zentrierdorn
- 24: weiteres Lager
- 25: Lagermodul
- 26: Lager zur drehbaren Lagerung der Eingangswelle 7
- 27: Drehwinkelsensor
- 28: Lenkwinkelsensor
- 29: Gehäuse des Lagermoduls 25
- 30: Gesamtelektronik
- 31: Außenring
- 32: Innenring
- 33: Wellengenerator
- 34: Kugellager
- 35: Schnitthöhe
- 36: Profilbezugslinie
- 37: Teilkreis
- 38: Zahnfuß
- 39: Innenfläche des Innenrings

## Patentansprüche

1. Fahrzeuglenkung (1) mit einem Überlagerungssteller (3), der den mit einer Lenkhandhabe (2) ausgeübten Lenkbewegungen zusätzliche Lenkbewegungen überlagert und der einen Motor und ein als Spannungswellengetriebe (9) ausgebildetes Überlagerungsgetriebe aufweist, wobei das Spannungswellengetriebe einen starren Außenring (11) mit einer Innenverzahnung (12) aufweist, in den an zwei gegenüberliegenden Stellen ein flexibler Innenring (13) mit einer Außenverzahnung (14) eingreift, **dadurch gekennzeichnet, dass** die Außenverzahnung des flexiblen Innenrings (13) zwischen 54 und 66 Zähnen, insbesondere genau 60 Zähne, aufweist und dass die Innenverzahnung (12) des starren Außenrings (11) genau zwei Zähne mehr aufweist, als die Außenverzahnung (14) des flexiblen Innenrings (13).

2. Fahrzeuglenkung nach Anspruch 1, **dadurch gekennzeichnet, dass**
a. die Außenverzahnung (14) und die Innenverzahnung (12) jeweils ein Modul im Bereich von 0,7 mm bis 1,0 mm oder im Bereich von 0,8 mm bis 0,9 mm oder im Bereich von 0,84 mm bis 0,86 mm oder von 0,8466 mm aufweist, und/oder dass
b. die Außenverzahnung (14) des Innenrings (13) einen Teilkreisdurchmesser im Bereich von 50 mm bis 51 mm oder im Bereich von 50,6 mm bis 50,9 mm oder von 50,796 mm, aufweist, und/oder dass
c. die Innenverzahnung (12) des Außenrings (11) einen Teilkreisdurchmesser im Bereich von 52 mm bis 53 mm oder im Bereich von 52,4 mm bis 52,6 mm oder von 52,489 mm, aufweist.

3. Fahrzeuglenkung nach Anspruch 1 oder 2, **dadurch gekennzeichnet, dass** das Spannungswellengetriebe (9) eine Deflektion im Bereich von 1 mm bis 1,2 mm oder im Bereich von 1,1 mm bis 1,16 mm oder von 1,1355 mm aufweist.

4. Fahrzeuglenkung nach einem der Ansprüche 1 bis 3, **dadurch gekennzeichnet, dass**
a. das Spannungswellengetriebe (9) einen Wellengenerator (18) aufweist, der mittels eines Lagers (22) drehbar in dem Innenring (13) gelagert ist, oder dass
b. das Spannungswellengetriebe (9) einen Wellengenerator (18) aufweist, der mittels eines Lagers (22) drehbar in dem Innenring (13) gelagert ist, wobei das Lager eine Schnitthöhe im Bereich von 6 mm bis 7,5 mm oder im Bereich von 6,6 mm bis 6,9 mm oder von 6,74 mm aufweist, oder dass
c. das Spannungswellengetriebe (9) einen Wellengenerator (18) aufweist, der mittels eines Lagers (22) drehbar in dem Innenring (13) gelagert ist, wobei die Wälzkörper des Lagers, insbesondere Kugeln, einen Wälzkörperdurchmesser im Bereich von 4,6 mm bis 4,9 mm oder im Bereich von 4,7 mm bis 4,8 mm oder von 4,763 mm aufweisen.

5. Fahrzeuglenkung nach Anspruch 4, **dadurch gekennzeichnet, dass**
a. bei dem Spannungswellengetriebe (9) die Größe, die sich errechnet aus (Deflektion/Schnitthöhe) im Bereich von 0,15 bis 0,19 liegt oder im Bereich von 0,16 bis 0,18 liegt oder dass
b. für das Spannungswellengetriebe (9) gilt: (Deflektion/Schnitthöhe) = 0,168.

6. Fahrzeuglenkung nach Anspruch 4 oder 5, **dadurch gekennzeichnet, dass**
a. bei dem Spannungswellengetriebe (9) die Größe, die sich errechnet aus (Deflektion/Schnitthöhe) x Wälzkörperdurchmesser im Bereich von 0,7 bis 0,9 liegt oder im Bereich von 0,75 bis 0,85 liegt oder dass
b. für das Spannungswellengetriebe (9) gilt: (Deflektion/Schnitthöhe) x Wälzkörperdurchmesser = 0,802.

7. Fahrzeuglenkung nach einem der Ansprüche 1 bis 6, **dadurch gekennzeichnet, dass**
a. bei dem Spannungswellengetriebe (9) das Verhältnis aus der Deflektion und dem Teilkreisdurchmesser des Innenrings (13) im Bereich von 0,02 bis 0,025 liegt oder im Bereich von 0,022 bis 0,023 liegt oder dass
b. bei dem Spannungswellengetriebe das Verhältnis aus der Deflektion und dem Teilkreisdurchmesser des Innenrings (13) 0,024 beträgt.

8. Fahrzeuglenkung nach einem der Ansprüche 1 bis 7, **dadurch gekennzeichnet, dass**
a. die Zähne der Verzahnung des Innenrings (13) einen Profilwinkel im Bereich von 30 Grad bis 38 Grad oder im Bereich von 34 Grad bis 36 Grad oder von 34,81 Grad aufweisen, und/oder dass
b. die Zähne der Verzahnung des Außenrings (11) einen Profilwinkel im Bereich von 30 Grad bis 38 Grad oder im Bereich von 33 Grad bis 35 Grad oder von 33,979 Grad aufweisen und/oder dass
c. die Zähne der Verzahnung des Innenrings (13) eine Zahndicke im Bereich von 0,9 mm bis 1,1 mm oder im Bereich von 1 mm bis 1,1 mm oder von 1,04 mm aufweisen, und/oder dass
d. die Zähne der Verzahnung des Außenrings (11) eine Zahndicke im Bereich von 1,8 mm bis 2 mm oder im Bereich von 1,9 mm bis 1,96 mm oder von 1,9309 mm aufweisen.

9. Fahrzeuglenkung nach einem der Ansprüche 1 bis 8, **dadurch gekennzeichnet, dass**
a. bei dem Spannungswellengetriebe (9) das Verhältnis aus der Deflektion und der Zähnezahl des Innenrings (13) im Bereich von 0,017 bis 0,021 liegt oder im Bereich von 0,018 bis 0,02 liegt oder dass
b. bei dem Spannungswellengetriebe (9) das Verhältnis aus der Deflektion und der Zähnezahl des Innenrings (13) 0,0189 beträgt, und/oder dass
c. bei dem Spannungswellengetriebe (9) das Verhältnis aus der Deflektion und der Kranzdicke des Innenrings (13) im Bereich von 1,2 bis 1,6 liegt oder im Bereich von 1,3 bis 1,5 liegt oder dass
d. bei dem Spannungswellengetriebe (9) das Verhältnis aus der Deflektion der Kranzdicke des Innenrings (13) 1,38 beträgt, und/oder dass
e. bei dem Spannungswellengetriebe (9) das Verhältnis aus der Deflektion und dem Profilwinkel der Zähne des Innenrings (13) im Bereich von 0,03 bis 0,042 liegt oder im Bereich von 0,032 bis 0,035 liegt, oder dass
f. bei dem Spannungswellengetriebe (9) das Verhältnis aus der Deflektion und dem Profilwinkel der Zähne des Innenrings (13) 0,0326 beträgt, und/oder dass
g. bei dem Spannungswellengetriebe (9) das Verhältnis aus der Deflektion und der Zahndicke der Zähne des Innenrings (13) im Bereich von 0,9 bis 1,3 liegt oder im Bereich von 1 bis 1,2 liegt oder dass
h. bei dem Spannungswellengetriebe (9) das Verhältnis aus der Deflektion und der Zahndicke der Zähne des Innenrings (13) 1,09 beträgt.

10. Fahrzeuglenkung nach einem der Ansprüche 1 bis 9, **dadurch gekennzeichnet, dass**
a. der evolventische Anteil der Verzahnungslänge des Innenrings (13) im Bereich von 20% bis 40% liegt oder im Bereich von 25% bis 35% liegt oder 30% beträgt, und/oder dass
b. der evolventische Anteil der Verzahnungslänge des Außenrings (11) im Bereich von 15% bis 35% liegt oder im Bereich von 20% bis 30% liegt oder 26% beträgt.

11. Fahrzeuglenkung nach einem der Ansprüche 1 bis 10, **dadurch gekennzeichnet, dass**
a. mehr als zwei Spulen des Motors auf eine gemeinsame Motorphase geschaltet sind und/oder dass
b. wenigstens eine Spule des Motors mit wenigstens zwei zueinander parallel geschalteten Drähten bewickelt ist, und/oder dass
c. auf wenigstens einem Statorzahn, insbesondere auf allen Statorzähnen jeweils, genau 17 Windungen vorhanden sind oder dass auf wenigstens einem Statorzahn, insbesondere auf allen Statorzähnen jeweils, mehr als 17 Windungen vorhanden sind, und/oder dass
d. bei dem Motor die Spulenquerschnittsfläche pro Spulenzahn größer als 1,4 mm² ist, und/oder dass
e. der Rotor des Motors mehr als 4 Polpaare aufweist und/oder dass
f. die Länge der Magnete 20 mm beträgt oder dass die Länge der Magnete mehr als 20 mm beträgt und/oder dass
g. der Außendurchmesser des Rotors im Bereich von 42 mm bis 46 mm liegt oder dass der Außendurchmesser des Rotors 45 mm beträgt und/oder dass
h. der Kopfkreisdurchmesser der Magnete größer als 40 mm ist.

12. Fahrzeuglenkung nach einem der Ansprüche 1 bis 11, **dadurch gekennzeichnet, dass**
a. der Motor und das Spannungswellengetriebe (9) koaxial zueinander angeordnet sind und/oder dass
b. der Motor und das Spannungswellengetriebe (9) gemeinsam den Überlagerungssteller (3) bilden und/oder dass
c. der Motor und das Spannungswellengetriebe (9) in einem gemeinsamen Gehäuse (16) angeordnet sind.

13. Fahrzeuglenkung nach einem der Ansprüche 1 bis 12, **dadurch gekennzeichnet, dass** der Überlagerungssteller (3) eine mit der Lenkhandhabe (2) mechanisch verbundene Eingangswelle (7) und eine von dem Motor angetriebene, mit einem Wellengenerator (18) des Spannungswellengetriebes (9) mechanisch verbundene, koaxial zur Eingangswelle (7) angeordnete Antriebswelle (21) aufweist.

14. Fahrzeuglenkung nach einem der Ansprüche 1 bis 13, **dadurch gekennzeichnet, dass**
a. die Außenverzahnung (14) des flexiblen Innenrings (13) statt zwischen 54 und 66 Zähnen, eine Zähnezahl im Bereich von 108 bis 122 Zähnen, insbesondere von genau 120 Zähnen aufweist und dass die Innenverzahnung (12) des starren Außenrings (11) genau vier Zähne mehr aufweist, als der flexible Innenring (13), oder dass
b. die Außenverzahnung (14) des flexiblen Innenrings (13) statt zwischen 54 und 66 Zähnen, eine Zähnezahl im Bereich von 108 bis 122 Zähnen, insbesondere von genau 120 Zähnen aufweist und dass die Innenverzahnung (12) des starren Außenrings (11) genau vier Zähne mehr aufweist, als der flexible Innenring, Innenring (13), wobei die Außenverzahnung (14) und die Innenverzahnung (12) jeweils einen Modulwert aufweisen, der der Hälfte der in Anspruch 2 genannten Modulwerte entspricht.

15. Fahrzeuglenkung nach einem der Ansprüche 1 bis 13, **dadurch gekennzeichnet, dass**
a. der Innenring (13) statt an zwei Stellen an drei Stellen in den Außenring (11) eingreift und dass die Außenverzahnung (14) des flexiblen Innenrings (13) statt zwischen 54 und 66 Zähnen, eine Zähnezahl im Bereich von 81 bis 99 Zähnen, insbesondere von genau 90 Zähnen aufweist und dass die Innenverzahnung (12) des starren Außenrings (11) genau drei Zähne mehr aufweist, als die Außenverzahnung (14) des flexiblen Innenrings (13), oder dass
b. der Innenring (13) statt an zwei Stellen an drei Stellen in den Außenring (11) eingreift und dass die Außenverzahnung (14) des flexiblen Innenrings (13) statt zwischen 54 und 66 Zähnen, eine Zähnezahl im Bereich von 81 bis 99 Zähnen, insbesondere von genau 90 Zähnen aufweist und dass die Innenverzahnung (12) des starren Außenrings (11) genau drei Zähne mehr aufweist, als die Außenverzahnung (14) des flexiblen Innenrings (13), wobei die Außenverzahnung und die Innenverzahnung jeweils einen Modulwert aufweisen, der 2/3 der in Anspruch 2 genannten Modulwerte entspricht, oder dass
c. der Innenring (13) statt an zwei Stellen an vier Stellen in den Außenring (11) eingreift und dass die Innenverzahnung (12) des Außenrings (11) statt zwei genau vier Zähne mehr aufweist, als die Außenverzahnung (14) des flexiblen Innenrings (13).

## Claims

1. Vehicle steering system (1) having a superimposing actuator (3) which superimposes additional steering movements onto the steering movements which are carried out by way of a steering handle (2), and which superimposing actuator (3) has a motor and a superimposing transmission which is configured as a strain wave gear mechanism (9), the strain wave gear mechanism having a rigid outer ring (11) with an internal toothing system (12), into which outer ring (11) a flexible inner ring (13) engages with an external toothing system (14) at two points which lie opposite one another, **characterized in that** the external toothing system of the flexible inner ring (13) has between 54 and 66 teeth, in particular precisely 60 teeth, and **in that** the internal toothing system (12) of the rigid outer ring (11) has precisely two more teeth than the external toothing system (14) of the flexible inner ring (13).

2. Vehicle steering system according to Claim 1, **characterized in that**
a. the external toothing system (14) and the internal toothing system (12) in each case have a gear module in the range from 0.7 mm to 1.0 mm or in the range from 0.8 mm to 0.9 mm or in the range from 0.84 mm to 0.86 mm or of 0.8466 mm, and/or **in that**
b. the external toothing system (14) of the inner ring (13) has a pitch circle diameter in the range from 50 mm to 51 mm or in the range from 50.6 mm to 50.9 mm or of 50.796 mm, and/or **in that**
c. the internal toothing system (12) of the outer ring (11) has a pitch circle diameter in the range from 52 mm to 53 mm or in the range from 52.4 mm to 52.6 mm or of 52.489 mm.

3. Vehicle steering system according to Claim 1 or 2, **characterized in that** the strain wave gear mechanism (9) has a deflection in the range from 1 mm to 1.2 mm or in the range from 1.1 mm to 1.16 mm or of 1.1355 mm.

4. Vehicle steering system according to one of Claims 1 to 3, **characterized in that**
a. the strain wave gear mechanism (9) has a wave generator (18) which is mounted rotatably in the inner ring (13) by means of a bearing (22), or **in that**
b. the strain wave gear mechanism (9) has a wave generator (18) which is mounted rotatably in the inner ring (13) by means of a bearing (22), the bearing having a sectional height in the range from 6 mm to 7.5 mm or in the range from 6.6 mm to 6.9 mm or of 6.74 mm, or **in that**
c. the strain wave gear mechanism (9) has a wave generator (18) which is mounted rotatably in the inner ring (13) by means of a bearing (22), the rolling bodies of the bearing, in particular balls, having a rolling body diameter in the range from 4.6 mm to 4.9 mm or in the range from 4.7 mm to 4.8 mm or of 4.763 mm.

5. Vehicle steering system according to Claim 4, **characterized in that**,
a. in the case of the strain wave gear mechanism (9), the value which is calculated from (deflection/sectional height) lies in the range from 0.15 to 0.19 or in the range from 0.16 to 0.18, or **in that**
b. it applies to the strain wave gear mechanism (9) that: (deflection/sectional height) = 0.168.

6. Vehicle steering system according to Claim 4 or 5, **characterized in that**,
a. in the case of the strain wave gear mechanism (9), the value which is calculated from (deflection/sectional height) x rolling body diameter lies in the range from 0.7 to 0.9 or lies in the range from 0.75 to 0.85, or **in that**,
b. it applies to the strain wave gear mechanism (9) that: (deflection/sectional height) x rolling body diameter = 0.802.

7. Vehicle steering system according to one of Claims 1 to 6, **characterized in that**,
a. in the case of the strain wave gear mechanism (9), the ratio of the deflection and the pitch circle diameter of the inner ring (13) lies in the range from 0.02 to 0.025 or lies in the range from 0.022 to 0.023, or **in that**,
b. in the case of the strain wave gear mechanism, the ratio of the deflection and the pitch circle diameter of the inner ring (13) is 0.024.

8. Vehicle steering system according to one of Claims 1 to 7, **characterized in that**
a. the teeth of the toothing system of the inner ring (13) have a profile angle in the range from 30 degrees to 38 degrees or in the range from 34 degrees to 36 degrees or of 34.81 degrees, and/or in that
b. the teeth of the toothing system of the outer ring (11) have a profile angle in the range from 30 degrees to 38 degrees or in the range from 33 degrees to 35 degrees or of 33.979 degrees, and/or in that
c. the teeth of the toothing system of the inner ring (13) have a tooth thickness in the range from 0.9 mm to 1.1 mm or in the range from 1 mm to 1.1 mm or of 1.04 mm, and/or **in that**
d. the teeth of the toothing system of the outer ring (11) have a tooth thickness in the range from 1.8 mm to 2 mm or in the range from 1.9 mm to 1.96 mm or of 1.9309 mm.

9. Vehicle steering system according to one of Claims 1 to 8, **characterized in that**,
a. in the case of the strain wave gear mechanism (9), the ratio of the deflection and the number of teeth of the inner ring (13) lies in the range from 0.017 to 0.021 or in the range from 0.018 to 0.02, or **in that**,
b. in the case of the strain wave gear mechanism (9), the ratio of the deflection and the number of teeth of the inner ring (13) is 0.0189, and/or **in that**,
c. in the case of the strain wave gear mechanism (9), the ratio of the deflection and the rim thickness of the inner ring (13) lies in the range from 1.2 to 1.6 or lies in the range from 1.3 to 1.5, or **in that**,
d. in the case of the strain wave gear mechanism (9), the ratio of the deflection and the rim thickness of the inner ring (13) is 1.38, and/or **in that**,
e. in the case of the strain wave gear mechanism (9), the ratio of the deflection and the profile angle of the teeth of the inner ring (13) lies in the range from 0.03 to 0.042 or lies in the range from 0.032 to 0.035, or **in that**,
f. in the case of the strain wave gear mechanism (9), the ratio of the deflection and the profile angle of the teeth of the inner ring (13) is 0.0326, and/or **in that**,
g. in the case of the strain wave gear mechanism (9), the ratio of the deflection and the tooth thickness of the teeth of the inner ring (13) lies in the range from 0.9 to 1.3 or lies in the range from 1 to 1.2, or **in that**,
h. in the case of the strain wave gear mechanism (9), the ratio of the deflection and the tooth thickness of the teeth of the inner ring (13) is 1.09.

10. Vehicle steering system according to one of Claims 1 to 9, **characterized in that**
a. the involute proportion of the toothing system length of the inner ring (13) lies in the range from 20% to 40% or lies in the range from 25% to 35% or is 30%, and/or **in that**
b. the involute proportion of the toothing system length of the outer ring (11) lies in the range from 15% to 35% or lies in the range from 20% to 30% or is 26%.

11. Vehicle steering system according to one of Claims 1 to 10, **characterized in that**
a. more than two coils of the motor are switched to a common motor phase, and/or **in that**
b. at least one coil of the motor is wound with at least two wires which are connected in parallel with one another, and/or **in that**
c. there are in each case precisely 17 windings on at least one stator tooth, in particular on all the stator teeth, or **in that** there are in each case more than 17 windings on at least one stator tooth, in particular on all the stator teeth, and/or **in that**,
d. in the case of the motor, the coil cross-sectional area per coil tooth is greater than 1.4 mm², and/or in that
e. the rotor of the motor has more than 4 pole pairs, and/or **in that**
f. the length of the magnets is 20 mm, or **in that** the length of the magnets is more than 20 mm, and/or in that
g. the external diameter of the rotor lies in the range from 42 mm to 46 mm, or **in that** the external diameter of the rotor is 45 mm, and/or **in that**
h. the tip circle diameter of the magnets is greater than 40 mm.

12. Vehicle steering system according to one of Claims 1 to 11, **characterized in that**
a. the motor and the strain wave gear mechanism (9) are arranged coaxially with respect to one another, and/or **in that**
b. the motor and the strain wave gear mechanism (9) together form the superimposing actuator (3), and/or **in that**
c. the motor and the strain wave gear mechanism (9) are arranged in a common housing (16).

13. Vehicle steering system according to one of Claims 1 to 12, **characterized in that** the superimposing actuator (3) has an input shaft (7) which is connected mechanically to the steering handle (2) and a drive shaft (21) which is driven by the motor, is connected mechanically to a wave generator (18) of the strain wave gear mechanism (9), and is arranged coaxially with respect to the input shaft (7).

14. Vehicle steering system according to one of Claims 1 to 13, **characterized in that**
a. the external toothing system (14) of the flexible inner ring (13) has, instead of between 54 and 66 teeth, a number of teeth in the range from 108 to 122 teeth, in particular of precisely 120 teeth, and **in that** the internal toothing system (12) of the rigid outer ring (11) has precisely four more teeth than the flexible inner ring (13), or **in that**
b. the external toothing system (14) of the flexible inner ring (13) has, instead of between 54 and 66 teeth, a number of teeth in the range from 108 to 122 teeth, in particular of precisely 120 teeth, and **in that** the internal toothing system (12) of the rigid outer ring (11) has precisely four more teeth than the flexible inner ring (13), the external toothing system (14) and the internal toothing system (12) in each case having a module value which corresponds to half the module values mentioned in Claim 2.

15. Vehicle steering system according to one of Claims 1 to 13, **characterized in that**
a. the inner ring (13) engages into the outer ring (11) at three points instead of at two points, and **in that** the external toothing system (14) of the flexible inner ring (13) has, instead of between 54 and 66 teeth, a number of teeth in the range from 81 to 99 teeth, in particular of precisely 90 teeth, and **in that** the internal toothing system (12) of the rigid outer ring (11) has precisely three more teeth than the external toothing system (14) of the flexible inner ring (13), or **in that**
b. the inner ring (13) engages into the outer ring (11) at three points instead of at two points, and **in that** the external toothing system (14) of the flexible inner ring (13) has, instead of between 54 and 66 teeth, a number of teeth in the range from 81 to 99 teeth, in particular of precisely 90 teeth, and **in that** the internal toothing system (12) of the rigid outer ring (11) has precisely three more teeth than the external toothing system (14) of the flexible inner ring (13), the external toothing system and the internal toothing system in each case having a module value which corresponds to 2/3 of the module values mentioned in Claim 2, or **in that**
c. the inner ring (13) engages into the outer ring (11) at four points instead of at two points, and **in that** the internal toothing system (12) of the outer ring (11) has, instead of two, precisely four more teeth than the external toothing system (14) of the flexible inner ring (13).

## Revendications

1. Direction de véhicule (1) comprenant un actionneur de superposition (3) qui superpose aux mouvements de direction exercés avec une commande manuelle de direction (2) des mouvements de direction supplémentaires et qui présente un moteur et une transmission de superposition réalisée sous forme d'engrenage à onde de déformation (9), l'engrenage à onde de déformation présentant une couronne extérieure rigide (11) avec une denture intérieure (12) dans laquelle s'engage, en deux endroits opposés, une couronne intérieure flexible (13) ayant une denture extérieure (14),
**caractérisée en ce que** la denture extérieure de la couronne intérieure flexible (13) présente entre 54 et 66 dents, en particulier exactement 60 dents, et **en ce que** la denture intérieure (12) de la couronne extérieure rigide (11) présente exactement deux dents de plus que la denture extérieure (14) de la couronne intérieure flexible (13) .

2. Direction de véhicule selon la revendication 1, **caractérisée en ce que**
a. la denture extérieure (14) et la denture intérieure (12) présentent chacune un module dans une plage de 0,7 mm à 1,0 mm ou dans une plage de 0,8 mm à 0,9 mm ou dans une plage de 0,84 mm à 0,86 mm ou de 0,8466 mm, et/ou **en ce que**
b. la denture extérieure (14) de la couronne intérieure (13) présente un diamètre de cercle partiel dans une plage de 50 mm à 51 mm ou dans une plage de 50,6 mm à 50,9 mm ou de 50,796 mm, et/ou **en ce que**
c. la denture intérieure (12) de la couronne extérieure (11) présente un diamètre de cercle partiel dans une plage de 52 mm à 53 mm ou dans une plage de 52,4 mm à 52,6 mm ou de 52,489 mm.

3. Direction de véhicule selon la revendication 1 ou 2, **caractérisée en ce que** l'engrenage à onde de déformation (9) présente une déflexion dans une plage de 1 mm à 1,2 mm ou dans une plage de 1,1 mm à 1,16 mm ou de 1,1355 mm.

4. Direction de véhicule selon l'une quelconque des revendications 1 à 3, **caractérisée en ce que**
a. l'engrenage à onde de déformation (9) présente un générateur d'onde (18) qui est supporté de manière rotative dans la couronne intérieure (13) au moyen d'un palier (22), ou **en ce que**
b. l'engrenage à onde de déformation (9) présente un générateur d'onde (18) qui est supporté de manière rotative dans la couronne intérieure (13) au moyen d'un palier (22), le palier présentant une hauteur en coupe dans une plage de 6 mm à 7,5 mm ou dans une plage de 6,6 mm à 6,9 mm ou de 6,74 mm, ou **en ce que**
c. l'engrenage à onde de déformation (9) présente un générateur d'onde (18) qui est supporté de manière rotative dans la couronne intérieure (13) au moyen d'un palier (22), les corps de roulement du palier, en particulier des billes, présentant un diamètre de corps de roulement dans une plage de 4,6 mm à 4,9 mm ou dans une plage de 4,7 mm à 4,8 mm ou de 4,763 mm.

5. Direction de véhicule selon la revendication 4, **caractérisée en ce que**
a. dans le cas de l'engrenage à onde de déformation (9), la grandeur qui s'obtient à partir de (déflexion/hauteur en coupe) est dans une plage de 0,15 à 0,19 ou dans une plage de 0,16 à 0,18 ou **en ce que**
b. pour l'engrenage à onde de déformation (9), on a : (déflexion/hauteur en coupe) = 0,168.

6. Direction de véhicule selon la revendication 4 ou 5, **caractérisée en ce que**
a. dans le cas de l'engrenage à onde de déformation (9), la grandeur qui s'obtient à partir de (déflexion/hauteur en coupe) x diamètre des corps de roulement est dans une plage de 0,7 à 0,9, ou dans une plage de 0,75 à 0,85 ou **en ce que**
b. pour l'engrenage à onde de déformation (9), on a (déflexion/hauteur en coupe) x diamètre des corps de roulement = 0,802.

7. Direction de véhicule selon l'une quelconque des revendications 1 à 6, **caractérisée en ce que**
a. dans le cas de l'engrenage à onde de déformation (9), le rapport de la déflexion et du diamètre de cercle partiel de la couronne intérieure (13) est dans une plage de 0,02 à 0,025, ou dans une plage de 0,022 à 0,023 ou **en ce que**
b. dans le cas de l'engrenage à onde de déformation, le rapport de la déflexion et du diamètre de cercle partiel de la couronne intérieure (13) vaut 0,024.

8. Direction de véhicule selon l'une quelconque des revendications 1 à 7, **caractérisée en ce que**
a. les dents de la denture de la couronne intérieure (13) présentent un angle de profil dans une plage de 30 degrés à 38 degrés ou dans une plage de 34 degrés à 36 degrés ou de 34,81 degrés, et/ou **en ce que**
b. les dents de la denture de la couronne extérieure (11) présentent un angle de profil dans une plage de 30 degrés à 38 degrés ou dans une plage de 33 degrés à 35 degrés ou de 33,979 degrés et/ou **en ce que**
c. les dents de la denture de la couronne intérieure (13) présentent une épaisseur de dent dans une plage de 0,9 mm à 1,1 mm ou dans une plage de 1 mm à 1,1 mm ou de 1,04 mm, et/ou en ce que
d. les dents de la denture de la couronne extérieure (11) présentent une épaisseur de dent dans une plage de 1,8 mm à 2 mm ou dans une plage de 1,9 mm à 1,96 mm ou de 1,9309 mm.

9. Direction de véhicule selon l'une quelconque des revendications 1 à 8, **caractérisée en ce que**
a. dans le cas de l'engrenage à onde de déformation (9), le rapport de la déflection et du nombre de dents de la couronne intérieure (13) est dans une plage de 0,017 à 0,021 ou dans une plage de 0,018 à 0,02 ou **en ce que**
b. dans le cas de l'engrenage à onde de déformation (9), le rapport de la déflection et du nombre de dents de la couronne intérieure (13) vaut 0,0189, et/ou **en ce que**
c. dans le cas de l'engrenage à onde de déformation (9), le rapport de la déflection et de l'épaisseur de couronne de la couronne intérieure (13) est dans une plage de 1,2 à 1,6 ou dans une plage de 1,3 à 1,5 ou **en ce que**
d. dans le cas de l'engrenage à onde de déformation (9), le rapport de la déflection et de l'épaisseur de couronne de la couronne intérieure (13) vaut 1,38, et/ou **en ce que**
e. dans le cas de l'engrenage à onde de déformation (9), le rapport de la déflection et de l'angle de profil des dents de la couronne intérieure (13) est dans une plage de 0,03 à 0,042 ou dans une plage de 0,032 à 0,035, ou **en ce que**
f. dans le cas de l'engrenage à onde de déformation (9), le rapport de la déflection et de l'angle de profil des dents de la couronne intérieure (13) vaut 0,0326, et/ou **en ce que**
g. dans le cas de l'engrenage à onde de déformation (9), le rapport de la déflection et de l'épaisseur de dent des dents de la couronne intérieure (13) est dans une plage de 0,9 à 1,3 ou dans une plage de 1 à 1,2 ou **en ce que**
h. dans le cas de l'engrenage à onde de déformation (9), le rapport de la déflection et de l'épaisseur de dent des dents de la couronne intérieure (13) vaut 1,09.

10. Direction de véhicule selon l'une quelconque des revendications 1 à 9, **caractérisée en ce que**
a. la proportion en développante de la longueur de denture de la couronne intérieure (13) est dans une plage de 20 % à 40 % ou dans une plage de 25 % à 35 % ou vaut 30 %, et/ou **en ce que**
b. la proportion en développante de la longueur de denture de la couronne extérieure (11) est dans une plage de 15 % à 35 % ou dans une plage de 20 % à 30 % ou vaut 26 %.

11. Direction de véhicule selon l'une quelconque des revendications 1 à 10, **caractérisée en ce que**
a. plus de deux bobines du moteur sont branchées sur une phase commune du moteur et/ou **en ce que**
b. au moins une bobine du moteur est enroulée avec au moins deux fils branchés en parallèle l'un de l'autre et/ou **en ce que**
c. sur au moins une dent de stator, en particulier sur toutes les dents de stator, à chaque fois exactement 17 enroulements sont prévus ou **en ce que** sur au moins une dent de stator, en particulier sur toutes les dents de stator, à chaque fois plus de 17 enroulements sont prévus, et/ou **en ce que**
d. dans le cas du moteur, la surface en section transversale des bobines par dent de bobine est supérieure à 1,4 mm², et/ou **en ce que**
e. le rotor du moteur présente plus de 4 paires de pôles et/ou **en ce que**
f. la longueur des aimants vaut 20 mm ou **en ce que** la longueur des aimants vaut plus de 20 mm et/ou **en ce que**
g. le diamètre extérieur du rotor est dans une plage de 42 mm à 46 mm ou **en ce que** le diamètre extérieur du rotor vaut 45 mm et/ou **en ce que**
h. le diamètre du cercle de tête des aimants est supérieur à 40 mm.

12. Direction de véhicule selon l'une quelconque des revendications 1 à 11, **caractérisée en ce que**
a. le moteur et l'engrenage à onde de déformation (9) sont disposés coaxialement l'un par rapport à l'autre et/ou **en ce que**
b. le moteur et l'engrenage à onde de déformation (9) forment ensemble l'actionneur de superposition (3) et/ou **en ce que**
c. le moteur et l'engrenage à onde de déformation (9) sont disposés dans un boîtier commun (16).

13. Direction de véhicule selon l'une quelconque des revendications 1 à 12, **caractérisée en ce que** l'actionneur de superposition (3) présente un arbre d'entrée (7) connecté mécaniquement à la commande manuelle de direction (2) et un arbre d'entraînement (21) disposé coaxialement par rapport à l'arbre d'entrée (7), entraîné par le moteur, connecté mécaniquement à un générateur d'onde (18) de l'engrenage à onde de déformation (9) .

14. Direction de véhicule selon l'une quelconque des revendications 1 à 13, **caractérisée en ce que**
a. la denture extérieure (14) de la couronne intérieure flexible (13), au lieu de présenter entre 54 et 66 dents, présente un nombre de dents dans une plage de 108 à 122 dents, en particulier exactement 120 dents et **en ce que** la denture intérieure (12) de la couronne extérieure rigide (11) présente exactement quatre dents de plus que la couronne intérieure flexible (13), ou **en ce que**
b. la denture extérieure (14) de la couronne intérieure flexible (13), au lieu de présenter entre 54 et 66 dents, présente un nombre de dents dans une plage de 108 à 122 dents, en particulier exactement 120 dents et **en ce que** la denture intérieure (12) de la couronne extérieure rigide (11) présente exactement quatre dents de plus que la couronne intérieure flexible (13), la denture extérieure (14) et la denture intérieure (12) présentant chacune une valeur de module qui correspond à la moitié des valeurs de module citées dans la revendication 2.

15. Direction de véhicule selon l'une quelconque des revendications 1 à 13, **caractérisée en ce que**
a. la couronne intérieure (13), au lieu de s'engager en deux endroits, s'engage en trois endroits dans la couronne extérieure (11) et **en ce que** la denture extérieure (14) de la couronne intérieure flexible (13), au lieu de présenter entre 54 et 66 dents, présente un nombre de dents dans une plage de 81 à 99 dents, en particulier exactement 90 dents et **en ce que** la denture intérieure (12) de la couronne extérieure rigide (11) présente exactement trois dents de plus que la denture extérieure (14) de la couronne intérieure flexible (13), ou **en ce que**
b. la couronne intérieure (13), au lieu de s'engager en deux endroits, s'engage en trois endroits dans la couronne extérieure (11) et **en ce que** la denture extérieure (14) de la couronne intérieure flexible (13), au lieu de présenter entre 54 et 66 dents, présente un nombre de dents dans une plage de 81 à 99 dents, en particulier exactement 90 dents et **en ce que** la denture intérieure (12) de la couronne extérieure rigide (11) présente exactement trois dents de plus que la denture extérieure (14) de la couronne intérieure flexible (13), la denture extérieure et la denture intérieure présentant à chaque fois une valeur de module qui correspond à 2/3 des valeurs de module citées dans la revendication 2, ou **en ce que**
c. la couronne intérieure (13), au lieu de s'engager en deux endroits, s'engage en quatre endroits dans la couronne extérieure (11) et **en ce que** la denture intérieure (12) de la couronne extérieure (11), au lieu de présenter deux dents de plus, présente exactement quatre dents de plus que la denture extérieure (14) de la couronne intérieure flexible (13).
